# EUROPEAN PATENT SPECIFICATION

(11) **EP 0 607 031 B1**
(45) Date of publication and mention of the grant of the patent: **06.10.1999**
(21) Application number: 94300205.5
(22) Date of filing: 12.01.1994
(51) Int. Cl.: C08K 5/00

(54) **Heat radiation-shielding material**
Gegen Wärmestrahlung schützendes Material
Matériau de protection contre le rayonnement de la chaleur

(30) Priority: 13.01.1993 JP 432693
(43) Date of publication of application: 20.07.1994
(73) Proprietor: NIPPON SHOKUBAI CO., LTD., Chuo-ku, Osaka-shi, Osaka-fu 541 (JP)
(72) Inventor: Kaieda, Osamu, Tsukuba-shi, Ibaraki (JP); Yodoshi, Takashi, Tsukuba-shi, Ibaraki (JP); Morita, Ken, Toyonaka-shi (JP); Matsuura, Michio, Sanda-shi, Hyogo (JP)
(74) Representative: Hale, Stephen Geoffrey

(56) References cited:
- EP-A- 0 373 643
- EP-A- 0 375 898
- US-A- 3 291 746

## Description

### BACKGROUND OF THE INVENTION

### 1. Field of the Invention

The present invention relates to a heat radiation-shielding material which absorbs near infrared rays. Specifically, the present invention relates to a resin which contains a novel phthalocyanine compound which has excellent ability to absorb near infrared rays, excellent compatibility to resins, and excellent light fastness, with a superior effect to allow visible light rays to pass relatively easily while blocking heat rays, and therefore it may be used as a resin board, sheet or film which is semi-transparent or transparent but blocks heat rays, for windows of buildings and vehicles, ceiling windows, doors, car garages, ceiling domes, gardening greenhouses, sunglasses, protective eyeglasses, and the like.

### 2. Related Art

In recent years, various uses have been proposed for heat radiation-shielding sheets which absorb near infrared rays, and ever more high-performance ones are in great demand. As major uses thereof, the following may be mentioned.

Conventionally, materials such as methacrylic resins, polycarbonate resins, and the like, because of their excellent transparency and weatherability, have been used for the so-called grading of the windows of buildings and vehicles, ceiling windows, doors, ceiling domes, etc., but since they also have a high transmittance of the heat rays in sunlight, they create the disadvantage of increased temperature of the interior upon exposure to direct sunlight. For this reason, there have been desired materials which subdue the increase in the temperature of the interior while transmitting sufficient visible light.

Presently, greenhouses and plastic hothouses are widely used in the field of plant cultivation for the improvement of crop yields and the adjustment of harvesting periods. One of the issues faced here is the prevention of temperature increases in the interior, particularly during the summer. Also, light from the near infrared region is known to have an effect on the regulation of the growth of plants, and thus absorbers of the near infrared region are added for the purpose of such regulation. For these reasons, effective heat radiation-shielding sheets have been desired which essentially do not block the transmittance of visible light rays which are necessary for the growth of plants.

Presently, infrared rays are often used to drive and stop electrical appliances such as magnetic tape recorders and the like, but this requires blocking of the near infrared rays from the exterior, which creates another demand for infrared shields.

Infrared rays contained in sunlight and infrared rays contained in light rays emitted by computer terminal displays and during welding are harmful to human eyes. Therefore, sunglasses, general-purpose eyeglasses, contact lenses, protective eyeglasses and the like which have a heat radiation-shielding effect are in demand for the protection of human eyes.

Thus, a number of proposals have been offered in the past for heat radiation-shielding sheets. The resins used in such cases include transparent polycarbonate resins, acrylic resins, vinyl chloride resins, etc. depending on the purpose. On the other hand, as additives which block heat rays, there are known a large number of dyes and pigments with near infrared region-absorbing properties, and materials have been proposed which employ them. However, all of these are accompanied by the disadvantage of poor transparency due to their strong absorption of the visible light region.

To overcome the above mentioned problems, there has been proposed, for example in Japanese Examined Patent Application No. 62-5190, a method of adding dyes with only slight absorbance in the visible light region, but since the ability of these dyes to absorb near infrared rays is poor, they must be added in large amounts to obtain a heat radiation-shielding effect, and this creates the disadvantage of lower transmittance of visible light rays, thus impairing the transparency of the material. Also, in Japanese Unexamined Patent Application Nos. 51-135886, 61-80106 and 62-903 there are proposed methods of adding pigments which absorb light in the near infrared region, but the disadvantages of their poor solubility and poor compatibility to resins lead to problems in achieving uniformity, and as a result their uses are limited.

In addition, in Japanese Unexamined Patent Application No. 63-106735, etc. there is proposed a material incorporating an inorganic pigment, but despite its heat radiation-shielding effect it transmits absolutely no visible light, and thus its uses are limited. Furthermore, in Japanese Unexamined Patent Application Nos. 1-161036 and 3-227366, etc. there are proposed methods of adding tungsten hexachloride and the like. However, although these methods provide good heat radiation-shielding effects, they are hampered by poor light stability, and in addition their high cost limits the fields in which they may be used.

Further, as may be seen in Japanese Examined Patent Application 43-25335, the use of infrared absorbers comprising organic colorings has been considered, and heat radiation-shielding sheets which employ these infrared absorbers are transparent and easily processed. However, as described in Japanese Examined Patent Application 43-25335, decomposition of organic infrared absorbers usually occurs at temperatures of over 200°C, and thus their restrictions from the point of view of handling include that their use is essentially restricted to cast polymers.

To overcome the problem of heat resistance of infrared absorbers, as may be seen for example in Japanese Unexamined Patent Application 3-161644, methods have been devised for the preparation of films by adding infrared absorbers with low heat resistance temperatures to transparent resins with low molding temperatures, and the forming of thermal laminates onto transparent resin boards with high molding temperatures, etc. However, these methods in essence do not provide a solution to the problem of heat resistance of the infrared absorbers. In addition, films which contain such infrared absorbers are formed by cast polymerization, and thus are rather expensive.

### SUMMARY OF THE INVENTION

The present invention was accomplished in light of the above mentioned circumstances of the prior art. That is, it is an object of the present invention to provide a low-cost, heat radiation-absorbing material which selectively absorbs light in the near infrared region, and which can effectively block the heat from sunlight while providing a relatively high transmittance of the visible region. In other words, the present invention was accomplished with an aim to provide a material which exhibits an excellent effect as a heat radiation-shielding material, by developing a transparent resin containing a novel phthalocyanine compound which has excellent ability to selectively absorb near infrared rays and excellent affinity to resins.

It is a further object of the present invention to provide heat radiation-shielding materials which may be used in a wide variety of fields, by using only low-cost organic materials as the components composing the heat radiation-shielding materials.

Also, since the phthalocyanine compounds according to the present invention exhibit favorable heat resistance, heat radiation-shielding materials may be prepared by highly productive molding methods such as injection molding, extrusion molding and the like, utilizing commonly used thermoplastic resins.

In order to overcome the above mentioned problems, the present invention provides a heat radiation-shielding material comprising a resin which contains a phthalocyanine compound represented by the following general formula I: 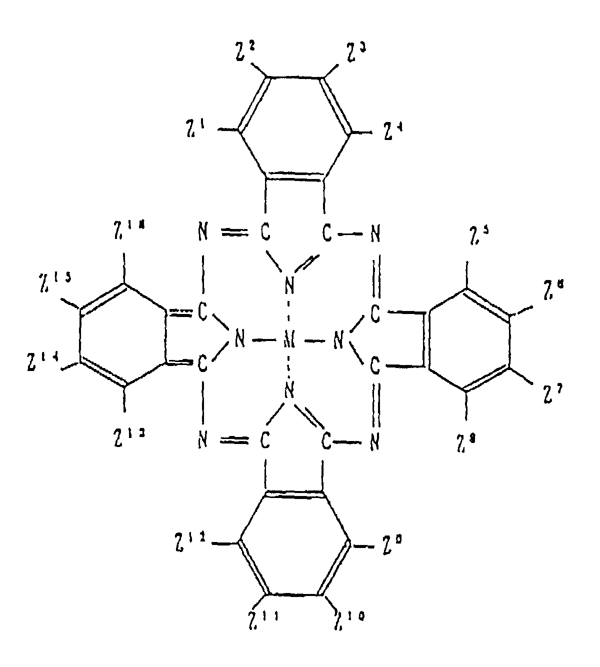 wherein Z¹-Z¹⁶ independently represent SR¹, OR², a hydrogen atom, a halogen atom, or NHY wherein Y independently represents a phenyl group which may have a substituent or an alkyl group of 1-8 carbon atoms; R¹ and R² independently represent a phenyl group which may have a substituent or an alkyl group having 1-20 carbon atoms; and M represents a non-metal, metal, metal oxide or metal halide; provided that at least one of Z¹-Z¹⁶ is NHY.

### BRIEF DESCRIPTION OF THE DRAWINGS

Fig. 1 is a chart showing the spectral transmittance of the molds obtained in Examples 21 and 40.

Fig. 2 is a chart showing the spectral transmittance of the molds obtained in Comparisons 5 and 6.

### DETAILED DESCRIPTION

In the general formula I according to the present invention, the halogen atom may be fluorine, chlorine, bromine, etc., and of these halogen atoms, fluorine is preferred. By using fluorine, an effect towards improved compatibility to the resin is achieved.

The alkyl group having 1-8 carbon atoms may be methyl, ethyl, n-propyl, isopropyl, n-butyl, isobutyl, tert-butyl, or linear or branched pentyl, hexyl, cyclohexyl, heptyl, or octyl or etc. The alkyl group having 1-20 carbon atoms include, in addition to the above-mentioned alkyl groups, nonyl, decyl, dodecyl, undecyl, tridecyl, tetradecyl, pentadecyl, hexadecyl, heptadecyl, octadecyl, nonadecyl, eicosyl, etc.

The phenyl group having a substituent may be a phenyl group which is substituted with 1-3 alkyl groups having 1-4 carbon atoms, a phenyl group which is substituted with 1-2 alkoxy groups having 1-4 carbon atoms, a phenyl group having one or two alkoxycarbonyl groups which have 1 to 8 carbon atoms, or a phenyl group which is substituted with 1-5 halogen atoms such as chlorine, fluorine, etc.

The central metal (M) is, for example, copper, zinc, cobalt, nickel, iron, vanadium, titanium, indium, tin, palladium, aluminum, etc. and oxide thereof, and the metal halide is, for example, a fluoride, chloride, bromide or iodide. M as a non-metal is intended to mean that M is an atom other than a metal, such as two hydrogen atoms. Preferably, as the central metal (M) is used copper, zinc, cobalt, nickel, iron, vanadyl, titanyl, chloroindium or dichlorotin, and particularly preferable for use are copper, zinc, cobalt, vanadyl and dichlorotin.

NHY in the phthalocyanine compounds represented by the above mentioned general formula I represents a phenylamino group or alkylamino group which may have a substituent, and it is an essential substituent. That is, at least one of Z¹ - Z¹⁶ is NHY. Preferably, in the phthalocyanine compound, at least 4 of Z², Z³, Z⁶, Z⁷, Z¹⁰, Z¹¹, Z¹⁴ and Z¹⁵ are NHY, and into the remaining positions are introduced substituents selected from the group consisting of phenylthio and alkylthio groups which may have a substituent, represented by SR¹; phenyloxy and alkyloxy groups which may have a substituent, represented by OR²; hydrogen; halogen atoms; and NHY.

Even more preferably, in the phthalocyanine compound, either of Z² and Z³, either of Z⁶ and Z⁷, either of Z¹⁰ and Z¹¹ and either of Z¹⁴ and Z¹⁵ are NHY, and the remaining positions are SR¹, OR², hydrogen, a halogen atom or NHY. Yet more preferably, the phthalocyanine compound is one in which at least 4, and preferably 4 or 8, of Z¹, Z⁴, Z⁵, Z⁸, Z⁹, Z¹², Z¹³ and Z¹⁶ are halogen atoms, fluorine being preferred, hydrogen or OR².

Even more preferably, in the phthalocyanine compound, at least 6 of Z², Z³, Z⁶, Z⁷, Z¹⁰, Z¹¹, Z¹⁴ and Z¹⁵ are NHY and the total number of NHY substituents in Z¹-Z¹⁶ is 9 or less. Yet more preferably, the phthalocyanine compound is one in which at least 4, and preferably 4 or 8, of Z¹, Z⁴, Z⁵, Z⁸, Z⁹, Z¹², Z¹³ and Z¹⁶ are halogen atoms, fluorine being preferred, hydrogen or OR². Most preferably, the phthalocyanine compound is one in which Z¹, Z⁴, Z⁵, Z⁸, Z⁹, Z¹², Z¹³ and Z¹⁶ are halogen (particularly fluorine) atoms.

As concrete examples of the phthalocyanine skeleton in the above general formula I may be mentioned the following group of compounds. In this group of compounds, Pc represents the phthalocyanine skeleton, and Y, R¹ and R³ represent the same species as indicated above in general formula I. Also, the 3,6 positions below indicate substituents at the a positions (Z¹, Z⁴, Z⁵, Z⁸, Z⁹, Z¹², Z¹³ and Z¹⁶) of the phthalocyanine skeleton, and the 4,5 positions below indicate substituents at the β positions (Z², Z³, Z⁶, Z⁷, Z¹⁰, Z¹¹, Z¹⁴ and Z¹⁵) of the phthalocyanine skeleton.

Specific examples of the phthalocyanine compounds to be used according to the present invention are provided below.

### Group 1 Type Pc(NHY)8X8 (X = halogen)

. 4,5-octakis(anilino)-3,6-octafluorophthalocyanine
   Abbreviation: Pc(PhNH)8F8
. 4,5-octakis(o-toluidino)-3,6-octafluorophthalocyanine
   Abbreviation: Pc(o-TolNH)8F8
. 4,5-octakis(p-toluidino)-3,6-octafluorophthalocyanine
   Abbreviation: Pc(p-TolNH)8F8
. 4,5-octakis(m-toluidino)-3,6-octafluorophthalocyanine
   Abbreviation: Pc(m-TolNH)8F8
. 4,5-octakis(2,4-xylidino)-3,6-octafluorophthalocyanine
   Abbreviation: Pc(2,4-XyNH)8F8
. 4,5-octakis(2,6-xylidino)-3,6-octafluorophthalocyanine
   Abbreviation: Pc(2,6-XyNH)8F8
. 4,5-octakis(o-methoxyanilino)-3,6-octafluorophthalocyanine
   Abbreviation: Pc(o-MeOPhNR)8F8
. 4,5-octakis(p-methoxyanilino)-3,6-octafluorophthalocyanine
   Abbreviation: Pc(p-MeOPhNH)8F8
. 4,5-octakis(m-methoxyanilino)-3,6-octafluorophthalocyanine
   Abbreviation: Pc(m-MeOPhNH)8F8
. 4,5-octakis(o-fluoroanilino)-3,6-octafluorophthalocyanine
   Abbreviation: Pc(o-FPhNH)8F8
. 4,5-octakis(p-fluoroanilino)-3,6-octafluorophthalocyanine
   Abbreviation: Pc(p-FPhNH)8F8
. 4,5-octakis(2,3,5,6-tetrafluoroanilino)-3,6-octafluorophthalocyanine
   Abbreviation: Pc(F4PhNH)8F8
. 4,5-octakis(o-ethoxycarbonylanilino)-3,6-octafluorophthalocyanine
   Abbreviation: Pc(o-eCPhNH)8F8
. 4,5-octakis(p-ethoxycarbonylanilino)-3,6-octafluorophthalocyanine
   Abbreviation: Pc(p-eCPhNH)8F8
. 4,5-octakis(m-ethoxycarbonylanilino)-3,6-octafluorophthalocyanine
   Abbreviation: Pc(m-eCPhNH)8F8
. 4,5-octakis(methylamino)-3,6-octafluorophthalocyanine
   Abbreviation: Pc(MeNH)8F8
. 4,5-octakis(ethylamino)-3,6-octafluorophthalocyanine
   Abbreviation: Pc(EtNH)8F8
. 4,5-octakis(butylamino)-3,6-octafluorophthalocyanine
   Abbreviation: Pc(BuNH)8F8
. 4,5-octakis(octylamino)-3,6-octafluorophthalocyanine
   Abbreviation: Pc(OctNH)8F8
. 4,5-(heptakisanilinomonofluoro)-3,6-(monoanilinheptafluoro)phthalocyanine
   Abbreviation: Pc[(PhNH)7F1]([PhNH)lF7)]
. 4,5-(hexakisanilino-difluoro)-3,6-(bisanilino-hexafluoro)phthalocyanine
   Abbreviation: Pc[(PhNH)6F2][(PhNH)2F6]
. 4,5-(pentakisanilino-trifluoro)-3,6-(trisanilino-pentafluoro)phthalocyanine
   Abbreviation: Pc[(PhNH)5F3][(PhNH)3F5]
. 4,5-octakis(anilino)-3,6-octachlorophthalocyanine
   Abbreviation: Pc(PhNH)8Cl8
. 4,5-octakis(butylamino)-3,6-octachlorophthalocyanine
   Abbreviation: Pc(BuNH)8Cl8

### Group 2 Type Pc(NHY)4X12 (X = halogen)

. 4-tetrakis(anilino)-3,5,6-dodecafluorophthalocyanine
   Abbreviation: Pc(PhNH)4F12
. 4-tetrakis(butylamino)-3,5,6-dodecafluorophthalocyanine
   Abbreviation: Pc(BuNH)4F12
. 4-tetrakis(octylamino)-3,5,6-dodecafluorophthalocyanine
   Abbreviation: Pc(OctNH)4F12
. 4-tetrakis(p-toluidino)-3,5,6-dodecafluorophthalocyanine
   Abbreviation: Pc(p-TolNH)4F12
. 4-tetrakis(o-methoxyanilino)-3,5,6-dodecafluorophthalocyanine
   Abbreviation: Pc(o-MeOPhNH)4F12
. 4-tetrakis(p-fluoroanilino)-3,5,6-dodecafluorophthalocyanine
   Abbreviation: Pc(p-FPhNH)4F12
. 4-tetrakis(anilino)-3,5,6-dodecachlorophthalocyanine
   Abbreviation: Pc(PhNH)4C112
. 4-tetrakis(butylamino)-3,5,6,-dodecachlorophthalocyanine
   Abbreviation: Pc(BuNH)4C112

### Group 3 Type Pc(NHY)8 (OR²)8 (cases in which 1-3 unsubstituted halogens remain are also included in this group)

. 4,5-octakis(anilino)-3,6-octakis(phenoxy)phthalocyanine
   Abbreviation: Pc(PhNH)8 (PhO)8
. 4,5-octakis(anilino)-3,6-octakis(o-methylphenoxy)phthalocyanine
   Abbreviation: Pc(PhNH)8 (o-McPhO)8
. 4,5-octakis(anilino)-3,6-octakis(p-ethoxyphenoxy)phthalocyanine
   Abbreviation: Pc(PhNH)8 (p-EtOPhO)8
. 4,5-octakis(anilino)-3,6-octakis(n-butoxy)phthalocyanine
   Abbreviation: Pc(PhNH)8 (BuO)8
. 4,5-octakis(anilino)-3,6-octakis(octyloxy)phthalocyanine
   Abbreviation: Pc(PhNH)8 (OctO)8
. 4,5-octakis(p-methoxyanilino)-3,6-octakis(phenoxy)phthalocyanine
   Abbreviation: Pc(p-MeOPhNH)8 (PhO)8
. 4,5-octakis(cyclohexylamino)-3,6-octakis(phenoxy)phthalocyanine
   Abbreviation: Pc(cy-HeXPhNH)8 (PhO)8
. 4,5-octakis(n-butylamino)-3,6-octakis(phenoxy)phthalocyanine
   Abbreviation: Pc(BuNH)8 (PhO)8
. 4,5-octakis(n-butylamino)-3,6-octakis(n-butoxy)phthalocyanine
   Abbreviation: Pc(BuNH)8 (BuO)8

### Group 4 Type Pc(NHY)4 (OR²)12 (cases in which 1-3 unsubstituted halogens remain are also included in this group)

. 4-tetrakis(anilino)-3,5,6-dodecakis(phenoxy)phthalocyanine
   Abbreviation: Pc(PhNH)4 (PhO)12
. 4-tetrakis(anilino)-3,5,6-dodecakis(p-methylphenoxy) phthalocyanine
   Abbreviation: Pc(PhNH)4 (p-Mepho)12
. 4-tetrakis(anilino)-3,5,6-dodecakis(p-ethylphenoxy)phthalocyanine
   Abbreviation: Pc(PhNH)4 (p-EtPhO)12
. 4-tetrakis(anilino)-3,5,6-dodecakis(p-ethoxyanilino) phthalocyanine
   Abbreviation: Pc(PhNH)4 (o-EtOPhNH)12
. 4-tetrakis(anilino)-3,5,6-dodecakis(p-butoxyphenoxy) phthalocyanine
   Abbreviation: Pc(PhNH)4 (p-BuOPhO)12
. 4-tetrakis(anilino)-3,5,6-dodecakis(p-fluorophenoxy) phthalocyanine
   Abbreviation: Pc(PhNH)4 (p-FPhO)12
. 4-tetrakis(anilino)-3,5,6-dodecakis(2,4-difluorophenoxy) phthalocyanine
   Abbreviation: Pc(PhNH)4 (2,4-FPhO)12
. 4-tetrakis(anilino)-3,5,6-dodecakis(2,3,5,6-tetrafluorophenoxy) phthalocyanine
   Abbreviation: Pc(PhNH)4 (F4PhO)12
. 4-tetrakis(anilino)-3,5,6-dodecakis(o-chlorophenoxy) phthalocyanine
   Abbreviation: Pc(PhNH)4 (o-ClPhO)12
. 4-tetrakis(anilino)-3,5,6-dodecakis(ethoxy)phthalocyanine
   Abbreviation; Pc(PhNH)4 (EtO)12
. 4-tetrakis(anilino)-3,5,6-dodecakis(n-butoxy)phthalocyanine
   Abbreviation: Pc(PhNH)4 (BuO)12
. 4-tetrakis(anilino)-3,5,6-dodecakis(n-octyloxy)phthalocyanine
   Abbreviation: Pc(PhNH)4 (OctO)12
. 4-tetrakis(anilino)-3,5,6-dodecakis(n-dodecyloxy)phthalocyanine
   Abbreviation: Pc(PhNH)4 (DodO)12
. 4-tetrakis(anilino)-3,5,6-dodecakis(cyclohexyloxy)phthalocyanine
   Abbreviation: Pc(PhNH)4 (cy-HexO)12
. 4-tetrakis(o-toluidino)-3,5,6-dodecakis(phenoxy)phthalocyanine
   Abbreviation: Pc(o-TolNH)4 (PhO)12
. 4-tetrakis(o-toluidino)-3,5,6-dodecakis(n-butoxy)phthalocyanine
   Abbreviation: Pc(o-TolNH)4 (BuO)12
. 4-tetrakis(p-toluidino)-3,5,6-dodecakis(phenoxy)phthalocyanine
   Abbreviation: Pc(p-TolNH)4 (PhO)12
. 4-tetrakis(p-toluidino)-3,5,6-dodecakis(o-methylphenoxy) phthalocyanine
   Abbreviation: Pc(p-TolNH)4 (o-MePhO)12
. 4-tetrakis(p-methoxyanilino)-3,5,6-dodecakis(phenoxy) phthalocyanine
   Abbreviation: Pc(p-MeOPhNH)4 (PhO)12
. 4-tetrakis(p-ethoxyanilino)-3,5,6-dodecakis(phenoxy) phthalocyanine
   Abbreviation: Pc(p-MeOPhNH)4 (PhO)12
. 4-tetrakis(2,3,5,6-tetrafluoroanilino)-3,5,6-dodecakis(phenoxy) phthalocyanine
   Abbreviation: Pc(p-EtOPhNH)4 (PhO)12
. 4-tetrakis(ethylamino)-3,5,6-dodecakis(phenoxy)phthalocyanine
   Abbreviation: Pc(EtNH)4 (PhO)12
. 4-tetrakis(n-butylamino)-3,5,6-dodecakis(phenoxy)phthalocyanine
   Abbreviation: Pc(BuNH)4 (PhO)12
. 4,5-octakis(anilino)-3,6-octakis(phenoxy)phthalocyanine

### Group 5 Type Pc(NHY)8 H8

. 4,5-octakis(anilino)phthalocyanine
   Abbreviation: Pc(PhNH)8
. 4,5-octakis(o-toluidino)phthalocyanine
   Abbreviation: Pc(o-TolNH)8
. 4,5-octakis(p-toluidino)phthalocyanine
   Abbreviation: Pc (p-TolNH) 8
. 4,5-octakis(butylamino)phthalocyanine
   Abbreviations: Pc(BuNH)8
. 4,5-octakis(2,4-xylidino)phthalocyanine
   Abbreviation: Pc(2,4-XyNH)8
. 4,5-octakis(2,6-xylidino)phthalocyanine
   Abbreviation: Pc(2,6-XyNH)8
. 4,5-octakis(o-methoxyanilino)phthalocyanine
   Abbreviation: Pc(o-MeOPhNH)8
. 4,5-octakis(2,3,5,6-tetrafluoroanilino)phthalocyanine
   Abbreviation: Pc(F4PhNH)8
. 4,5-octakis(o-ethoxycarbonylanilino)phthalocyanine
   Abbreviation: Pc(o-eCPhNH)8
. 4,5-octakis(octylamino)phthalocyanine
   Abbreviation: Pc(OxNH)8

### Group 6 Type Pc(NHY)4 H12

. 4-tetrakis(anilino)phthalocyanine
   Abbreviation: Pc(PhNH)4
. 4-tetrakis(butylamino)phthalocyanine
   Abbreviation: Pc(BuNH)4
. 4-tetrakis(p-toluidino)phthalocyanine
   Abbreviation: Pc(p-TolNH)4
. 4-tetrakis(o-methoxyanilino)phthalocyanine
   Abbreviation: Pc(o-MeOPhNH)4
. 4-tetrakis(octylamino)phthalocyanine
   Abbreviation: Pc(OxNH)4

### Group 7 Type Pc(NHY)8 (SR¹)8

. 4,5-octakis(anilino)-3,6-octakis(phenylthio)phthalocyanine
   Abbreviation: Pc(PhNH)8 (PhS)8
. 4,5-octakis(anilino)-3,6-octakis(o-methylphenylthio) phthalocyanine
   Abbreviation: Pc(PhNH)8 (o-MePhs)8
. 4,5-octakis(anilino)-3,6-octakis(p-ethoxyphenylthio) phthalocyanine
   Abbreviation: Pc(PhNH)8 (p-EtOPhS)8
. 4,5-octakis(anilino)-3,6-octakis(p-chlorphenylthio) phthalocyanine
   Abbreviation: Pc(PhNH)8 (p-ClPhS)8
. 4,5-octakis(anilino)-3,6-octakis(ethylthio)phthalocyanine
   Abbreviation: Pc(PhNH)8 (EtS)8
. 4,5-octakis(anilino)-3,6-octakis(n-butylthio)phthalocyanine
   Abbreviation: Pc(PhNH)8 (BuS)8
. 4,5-octakis(anilino)-3,6-octakis(n-dodecylthio)phthalocyanine
   Abbreviation: Pc(PhNH)8 (DodS)8
. 4,5-octakis(o-toluidino)-3,6-octakis(phenylthio) phthalocyanine
   Abbreviation: Pc(o-TolNH)8 (PhS)8
. 4,5-octakis(p-methoxyanilino)-3,6-octakis(phenylthio) phthalocyanine
   Abbreviation: Pc(p-MeOPhNH)8 (PhS)8
. 4,5-octakis(cyclohexylamino)-3,6-octakis(phenylthio) phthalocyanine
   Abbreviation: Pc(cy-HexPhNH)8 (PhS)8
. 4,5-octakis(n-butylamino)-3,6octakis(phenylthio)phthalocyanine
   Abbreviation: Pc(PhNH)8 (PhS)8
. 4,5-octakis(n-butylamino)-3,6-octakis(p-tert-butyl-phenylthio) phthalocyanine
   Abbreviation: Pc(BuNH)8 (p-tertBuPhS)8
. 4,5-octakis(n-butylamino)-3,6-octakis(n-butylthio)phthalocyanine
   Abbreviation: Pc(BuNH)8 (BuS)8
. 4,5-octakis(n-octylamino-3,6-octakis(phenylthio)phthalocyanine
   Abbreviation: Pc(OctNH)8 (PhS)8

### Group 8 Type Pc(NHY)4 (SR¹)12

. 4-tetrakis(anilino)-3,5,6-dodecakis(phenylthio)phthalocyanine
   Abbreviation: Pc(FhNH)4 (PhS)12
. 4-tetrakis(anilino)-3,5,6-dodecakis(o-methylphenylthio) phthalocyanine
   Abbreviation: Pc(PhNH)4 (o-TolS)12
. 4-tetrakis(anilino)-3,5,6-dodecakis(p-methylphenylthio) phthalocyanine
   Abbreviation: Pc(PhNH)4 (p-TolS)12
. 4-tetrakis(anilino)-3,5,6-dodecakis(p-ethylphenylthio) phthalocyanine
   Abbreviation: Pc(PhNH)4 (p-EtPhS)12
. 4-tetrakis(anilino)-3,5,6-dodecakis(p-(n-butyl)phenylthio) phthalocyanine
   Abbreviation: Pc(PhNH)4 (p-BuPhS)12
. 4-tetrakis(anilino)-3,5,6-dodecakis(p-fluorophenylthio) phthalocyanine
   Abbreviation: Pc(PhNH)4 (p-FPhS)12
. 4-tetrakis(anilino)-3,5,6-dodecakis(2,4-difluorophenylthio) phthalocyanine
   Abbreviation: Pc(PhNH)4 (2,4-FPhS)12
. 4-tetrakis(anilino)-3,5,6-dodecakis(2,3,5,6-tetrafluorophenylthio)phthalocyanine
   Abbreviation: Pc(PhNH)4 (F4PhS)12
. 4-tetrakis(anilino)-3,5,6-dodecakis(o-chlorophenylthio) phthalocyanine
   Abbreviation: Pc(PhNH)4 (o-ClPhs)12
. 4-tetrakis(anilino)-3,5,6-dadecakis(p-chlorophenylthio) phthalocyanine
   Abbreviation: Pc(PhNH)4 (p-ClPhS)12
. 4-tetrakis(anilino)-3,5,6-dodecakis(2,4-dichlorophenylthio) phthalocyanine
   Abbreviation: Pc(PhNH)4 (2,4-ClPh5)12
. 4-tetrakis(anilino)-3,5,6-dodecakis(methylthio)phthalocyanine
   Abbreviation: Pc(PhNH)4 (MeS)12
. 4-tetrakis(anilino)-3,5,6-dodecakis(echylthio)phthalocyanine
   Abbreviation: Pc(PhNH)4 (EtS)12
. 4-tetrakis(anilino)-3,5,6-dodecakis(n-butylthio)phthalocyanine
   Abbreviation: Fc(PhNH)4 (BuS)12
. 4-tetrakis(anilino)-3,5,6-dodecakis(tert-butylthio)phthalocyanine
   Abbreviation: Pc(PhNH)4 (tert-BuS)12
. 4-tetrakis(anilino)-3,5,6-dodecakis(n-hexylthio)phthalocyanine
   Abbreviation: Pc(PhNH)4 (HexS)12
. 4-tetrakis(anilino)-3,5,6-dodecakis(n-octylthio)phthalocyanine
   Abbreviation: Pc(PhNH)4 (OctS)12
. 4-tetrakis(anilino)-3,5,6-dodecakis(n-dodecylthio)phthalocyanine
   Abbreviation: Pc(PhNH)4 (DodS)12
. 4-tetrakis(anilino)-3,5,6-dodecakis(n-hexadecylthio) phthalocyanine
   Abbreviation: Pc(PhNH)4 (HedS)12
. 4-tetrakis(anilino)-3,5,6-dodecakis(cyclohexylthio)phthalocyanine
   Abbreviation: Pc(PhNH)4 (cy-HexS)12
. 4-tetrakis(o-toluidino)-3,5,6-dodecakis(phenylthio)phthalocyanine
   Abbreviation: Pc(o-TolNH)4 (PhS)12
. 4-tetrakis(o-toluidino)-3,5,6-dodecakis(o-methylphenylthio) phthalocyanine
   Abbreviation: Pc(o-TolNH)4 (o-TolS)12
. 4-tetrakis(o-toluidino)-3,5,6-dodecakis(p-fluorophenylthio) phthalocyanine
   Abbreviation: Pc(o-TolNH)4 (p-FPhS)12
. 4-tetrakis(o-toluidino)-3,5,6-dodecakis(ethylthio)phthalocyanine
   Abbreviation: Pc(o-TolNH)4 (EtS)12
. 4-tetrakis(o-toluidino)-3,5,6-dodecakis(n-octylthio) phthalocyanine
   Abbreviation: Pc(o-TolNH)4 (OctS)12
. 4-tetrakis(o-toluidino)-3,5,6-dodecakis(phenylthio)phthalocyanine
   Abbreviation: Pc(o-TolNH)4 (PhS)12
. 4-tetrakis(p-toluidino)-3,5,6-dodecakis(o-methylphenylthio) phthalocyanine
   Abbreviation: Pc(p-TolNH)4 (p-MePhS)12
. 4-tetrakis(p-toluidino)-3,5,6-dodecakis(phenylthio)phthalocyanine
   Abbreviation: Pc(p-TolNH)4 (PhS)12
. 4-tetrakis(p-methoxyanilino)-3,5,6-dodecakis(phenylthio) phthalocyanine
   Abbreviation: Pc(p-MeOPhNH)4 (PhS)12
. 4-tetrakis(p-ethoxyanilino)-3,5,6-dodecakis(phenylthio) phthalocyanine
   Abbreviation: Pc(p-EtOPhNH)4 (PhS)12
. 4-tetrakis(p-ethoxyanilino)-3,5,6-dodecakis(butylthio) phthalocyanine
   Abbreviation: Pc(p-EtOPhNH)4 (BuS)12
. 4-tetrakis(p-butoxyanilino)-3,5,6-dodecakis(phenylthio) phthalocyanine
   Abbreviation: Pc(p-BuOPhNH)4 (PhS)12
. 4-tetrakis(p-chloroanilino)-3,5,6-dodecakis(phenylthio) phthalocyanine
   Abbreviation: Pc(p-ClPhNH)4 (PhS)12
. 4-tetrakis(2,3,5,6-tetrafluoroanilino)-3,5,6-dodecakis(phenylthio)phthalocyanine
   Abbreviation: Pc(F4PhNH)4 (PhS)12
. 4-tetrakis(ethylamino)-3,5,6-dodecakis(phenylthio)phthalocyanine
   Abbreviation: Pc(EtNH)4 (PhS)12
. 4-tetrakis(n-butylamino)-3,5,6-dodecakis(phenylthio) phthalocyanine
   Abbreviation: Pc(BuNH)4 (PhS)12
. 4-tetrakis(n-butylamino)-3,5,6-dodecakis(butylthio) phthalocyanine
   Abbreviation: Pc(BuNH)4 (BuS)12
. 4-tetrakis(cyclohexylamino)-3,5,6-dodecakis(phenylthio phthalocyanine
   Abbreviation: Pc(cy-HexNH)4 (PhS)12
. 4-tetrakis(cyclohexylamino)-3,5,6-dodecakis(butylthio) phthalocyanine
   Abbreviation: Pc(cy-HexNH)4 (BuS)12

Compounds in which a portion of the functional groups at the 3,6 positions of the above mentioned phthalocyanine compounds are substituted with fluorine atoms may also be effectively used according to the present invention.

Preferred of the above groups of compounds according to the present invention are Group (1), Group (2), Group (3), Group (4) and Group (5). These groups of compounds have excellent compatibility with the resins used and excellent heat resistance, and thus they may be added to a resin at 220-350°C for, for example, extrusion molding.

Particularly preferred of the above groups of compounds according to the present invention are Group (1), Group (3) and Group (5). These groups of compounds have excellent ability to absorb heat rays as a result of their high absorbance particularly in the wavelength region of heat rays. Of Group (1), which is the most easily and practically produced among the Groups (1), (3) and (5), those compounds wherein fluorine is used as the halogen atom are even more preferable.

The resin to be used according to the present invention may be appropriately selected depending on the intended use for the resulting heat radiation-shielding material, but resins which are essentially transparent and exhibit little absorbance and scattering are preferred. Concrete examples thereof include polycarbonate resins; (meth)acrylic resins such as methyl methacrylate, etc.; polystyrene; polyvinyl resins such as polyvinyl chloride, polyvinylidene chloride, etc.; polyolefinic resins such as polyethylene, polypropylene, etc.; polybutyral resins; vinyl acetate resins such as polyvinyl acetate, etc.; polyester resins; polyamide resins, and the like. Furthermore, use is not restricted to only one of the above mentioned resins so long as substantial transparency is maintained, and blends of 2 or more resins may be used, while the above mentioned resin may also be put between transparent glass sheets.

Of these resins are preferred polycarbonate resins, (meth)acrylic resins, polyester resins, polyethylene resins, polystyrene resins and polyvinyl chloride resins, which have excellent weatherability and transparency, and particularly preferred are polycarbonate resins, methacrylic resins, PET resins and polyvinyl chloride resins.

The polycarbonate resin is produced by reacting a dihydric phenol with a carbonate precursor by the solution method or the melting method. Representative examples of dihydric phenols include the following.

2,2-bis(4-hydroxyphenyl)propane [bisphenol A], 1,1-bis(4-hydroxyphenyl)ethane, 1,1-bis(4-hydroxyphenyl)cyclohexane, 2,2-bis(4-hydroxy-3,5-dimethylphenyl)propane, 2,2-bis(4-hydroxy-3,5-dibromophenyl)propane, 2,2-bis(4-hydroxy-3-methylphenyl)propane, bis(4-hydroxyphenyl) sulfide, bis(4-hydroxyphenyl) sulfone, etc. Preferred dihydric phenols are bis(4-hydroxyphenyl) alkane-type ones, and particularly those consisting mainly of bisphenol.

The acrylic resin may be methyl methacrylate alone or a mixture of polymerizable unsaturated monomers containing 50% or more of methyl methacrylate, or a copolymer thereof. As polymerizable unsaturated monomers which are copolymerizable with methyl methacrylate may be mentioned, for example, the following. Methyl acrylate, ethyl (meth)acrylate (methyl acrylate and methyl methacrylate, same hereunder), butyl (meth)acrylate, cyclohexyl (meth)acrylate, 2-ethylhexyl (meth)acrylate, methoxyethyl (meth)acrylate, ethoxyethyl (meth)acrylate, 2-hydroxyethyl (meth)acrylate, N,N-diethylaminoethyl (meth)acrylate, glycidyl (meth)acrylate, tribromophenyl (meth)acrylate, tetrahydroxyfurfuryl (meth)acrylate, ethyleneglycol di(meth)acrylate, triethyleneglycol di(meth)acrylate, tripropyleneglycol di(meth)acrylate, trimethylolethane di(meth)acrylate, neopentylglycol di(meth)acrylate, trimethylolpropane tri(meth)acrylate, pentaerythritol tetra(meth)acrylate, etc.

As the vinyl chloride resin may be used not only polymers of vinyl chloride monomers alone, but also copolymers comprising mainly vinyl chloride. As monomers which may be copolymerized with vinyl chloride may be mentioned vinylidene chloride, ethylene, propylene, acrylonitrile, vinyl acetate, maleic acid, itaconic acid, acrylic acid, methacrylic acid, etc.

In carrying out the present invention, there may be added any of a number of additives which are commonly used for the production of transparent resin materials. As additives may be mentioned, for example, coloring agents, polymerization modifiers, antioxidants, ultraviolet absorbers, flame retardants, plasticizers, rubbers to improve shock resistance, release agents, etc.

Methods of molding a transparent resin mixture containing the above mentioned phthalocyanine compound include extrusion molding, injection molding, cast molding, press molding, calender molding, cast coating, and the like.

A film containing the phthalocyanine compound may be prepared and formed onto a transparent resin board by a heat press or heat laminator to prepare a heat radiation-shielding sheet.

Furthermore, an acrylic resin ink or paint, etc. containing the phthalocyanine compound may be printed or coated onto a transparent resin board to obtain a heat radiation-shielding sheet.

Phthalocyanine compounds to be used according to the present invention have excellent heat resistance compared with commersially available infrared absorbers, and thus they may be molded using an acrylic resin, polycarbonate resin or PET resin by a molding method such as injection molding or extrusion molding in which the temperature of the resin is increased to high temperature of 220-350°C, to obtain highly transparent molds with excellent heat radiation-shielding properties.

There is also no problem with its use at molding temperatures of under 220°C.

There are no particular restrictions on the shape of the heat radiation-shielding material, as it may have any of a variety of shapes including, in addition to the most common flat board or film shapes, a corrugated, spherical or dome shape, etc.

The amount of the phthalocyanine compound to be used according to the present invention may be varied depending on the desired transmittance of the visible and near infrared regions for the heat radiation-shielding sheet as well as the thickness of the sheet, but normally the amount is 0.0005-20 parts by weight, and preferably 0.0015-10 parts by weight based on 100 parts by weight of the transparent resin.

The content thereof will differ depending on the shape of the heat radiation-shielding material, and for example, in the case of preparation of a heat radiation-shielding sheet of 3 mm thickness, a content of 0.002-0.06 parts by weight, and particularly 0.005-0.03 parts by weight, is preferred.

In the case of preparation of a heat radiation-shielding sheet of 10 mm thickness, the content is preferably 0.0005-0.02 wt%, and more preferably 0.0015-0.01 parts by weight. In the case of preparation of a heat radiation-shielding film of 10 µm thickness, the content is preferably 0.5-20 parts by weight, and more preferably 1.5-10 parts by weight. As an indication of the content of the phthalocyanine compound without regard to the thickness of the heat radiation-shielding material, considering the weight of the surface of projection from above, the content is preferably 0.06-2.4 g/m², and more preferably 0.18-1.2 g/m².

If the content of the phthalocyanine compound is less than 0.06 g/m² there will be less of a heat radiation-shielding effect, while if it exceeds 2.4 g/m² the cost will be considerably increased, and in some cases the transmittance of visible light will be too low.

For heteromorphic surfaces such as corrugated boards and the like, the weight may be considered as that of the surface of projection from above. Also, so long as there are no problems from the point of view of the appearance, the concentration distribution of the phthalocyanine compound may even be irregular. Furthermore, a mixture of different phthalocyanine compounds may be used, and when 2 or more compounds with different absorbance wavelengths are used, the heat radiation-shielding effect is accentuated.

In addition, by using a specific amount of carbon black with the phthalocyanine compound, the heat radiation-shielding effect is the same as when using the phthalocyanine compound alone while the amount of the phthalocyanine compound used may be reduced by half or more. Furthermore, the heat radiation-shielding effect is improved if the phthalocyanine compound is used in combination with a dye.

The content of carbon black in the heat radiation-shielding composition is 0.00007-3 parts by weight based on 100 parts by weight of the composition, but, similar to the content of the phthalocyanine compound, the most preferable content will differ greatly depending on the shape of the heat radiation-shielding material. For example, in the case of preparation of a heat radiation-shielding sheet of 3 mm thickness, the content is preferably 0,0002-0.008 parts by weight, and more preferably 0.001-0.004 parts by weight. In the case of preparation of a heat radiation-shielding sheet of 10 mm thickness, the content is preferably 0.00007-0.0025 parts by weight, and more preferably 0.0003-0.0013 parts by weight. In the case of preparation of a heat radiation-shielding film of 10 µm thickness, the content is preferably 0.07-3 parts by weight, and more preferably 0.3-1.5 parts by weight.

As an indication of the content of the carbon black without regard to the thickness of the heat radiation-shielding material, considering the weight of the surface of projection from above, the content is preferably 0.01-0.3 g/m², and more preferably 0.04-0.15 g/m².

If the content of the carbon black exceeds 0.3 g/m², then the entire light transmittance will be considerably low, while if it is less than 0.01 g/m² then it will be impossible to reduce the amount of the phthalocyanine compound to be added. The carbon black may be, for example, channel black, furnace black, thermal black, acetylene black, or the like.

### EXAMPLES

A more concrete description is provided below with reference to the Examples.

### Examples 1-10

To 100 parts by weight of a molten polycarbonate resin (trade name PANLITE 1285, product of Teijin Kasei, KK.) were added the phthalocyanine compounds listed in Table 1 in the amounts listed in Table 1, and sheets of 2 mm thickness were molded at 280°C using a T die and an extruder. The visible light transmittance and heat radiation transmittance of the obtained sheets were measured.

The transmission spectrum and transmittance of the obtained sheets were measured using a spectrophotometer (UV-3100, product of K. K. Shimazu Seisakusho). Also, the values of the visible light transmittance (400 nm-800 nm) and the heat radiation transmittance (800 nm-1800 nm) of the heat radiation-shielding sheets were determined based on the standard of JIS R-3106

That is, the visible light transmittance values correspond to the solar radiation transmittance value at 400-800 nm obtained based on JIS R-3106, divided by 0.531, and the heat radiation transmittance values correspond to the solar radiation transmittance value of 400-800 nm obtained based on JIS R-3106, divided by 0.444. The energy distribution of the sunlight was 0.025 for the range of 340-400 nm, 0.531 for the range of 400-800 nm, and 0.444 for the range of 800-1800 nm. The range of 340-400 nm was omitted as it is in the ultraviolet range.

### Comparative Example 1

A composition was prepared in the same formulation as in Example 1 by the same procedure as in Example 1, but without adding the phthalocyanine compound as in Example 1, to obtain the results shown in Table 1.

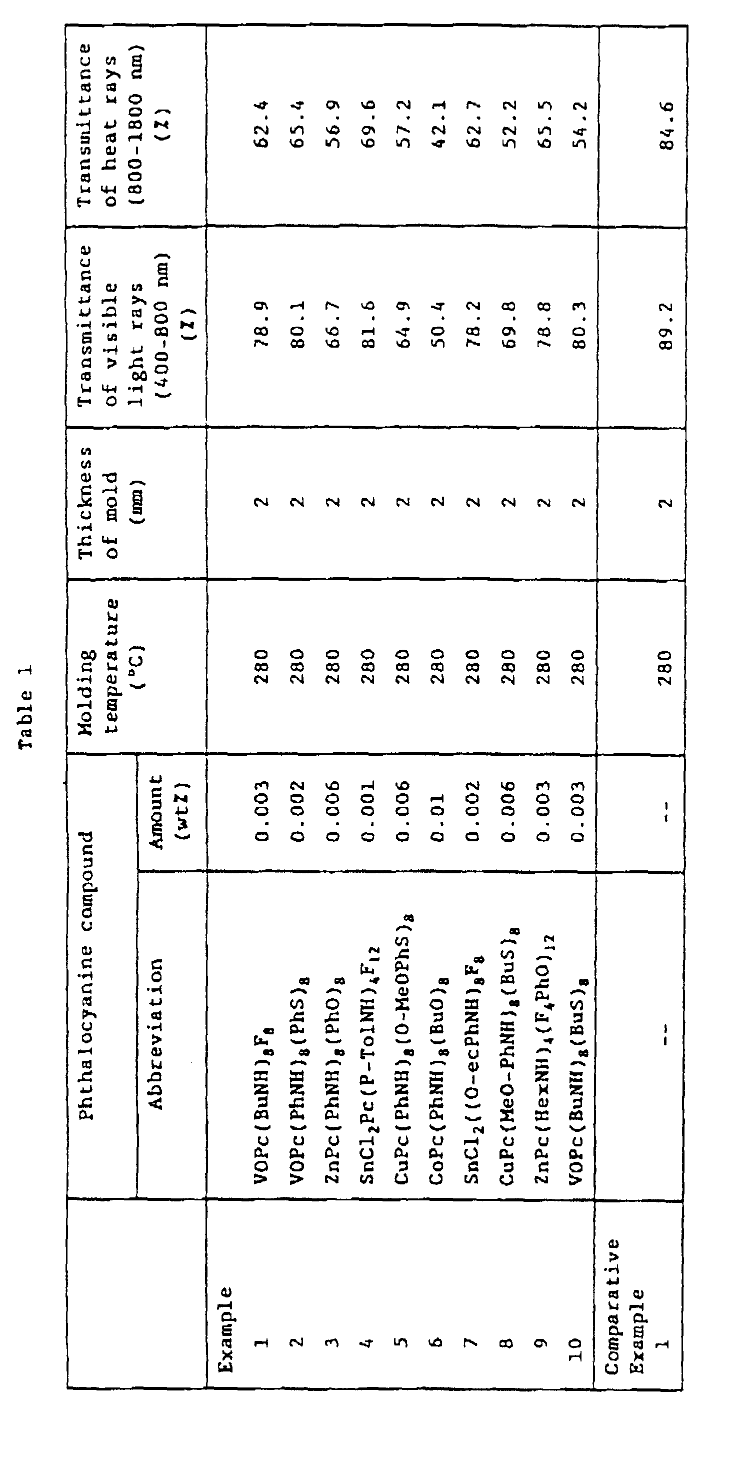

### Examples 11-21

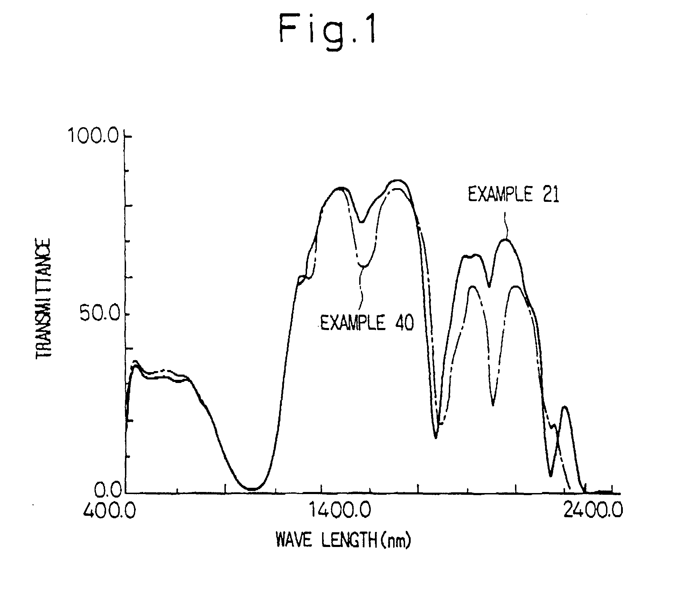

To 100 parts by weight of a molten polycarbonate resin (trade name PANLITE 1285, product of Teijin Kasei, KK.) were added the phthalocyanine compounds listed in Table 2 in the amounts listed in Table 2, and pellets were prepared at 280°C using an extruder and a pelletizer. Using the prepared pellets, 2 mm and 3 mm sheets were prepared at molding temperatures of 300°C and 330°C, using an injection molding machine. The visible light transmittance and heat radiation transmittance of the obtained sheets were measured. The spectral transmittance of the sheet obtained in Example 21 was measured and is shown in Fig. 1.

### Comparative Example 2

The same procedure as in Example 11 was followed, except for the addition of 0.0022 parts of Kayaset Red A-2G and 0.0026 parts of Kayaset Green A-B as dyes (both dyes products of Nihon Kayaku, KK.) instead of the phthalocyanine compound in Example 11, to obtain the results shown in Table 2.

### Comparative Example 3

The same procedure as in Comparative Example 2 was followed, except for increasing the amounts of the dyes in Comparative Example 2 from 0.0022 parts to 0.003 parts and from 0.0026 parts to 0.0035 parts, to obtain the results shown in Table 2.

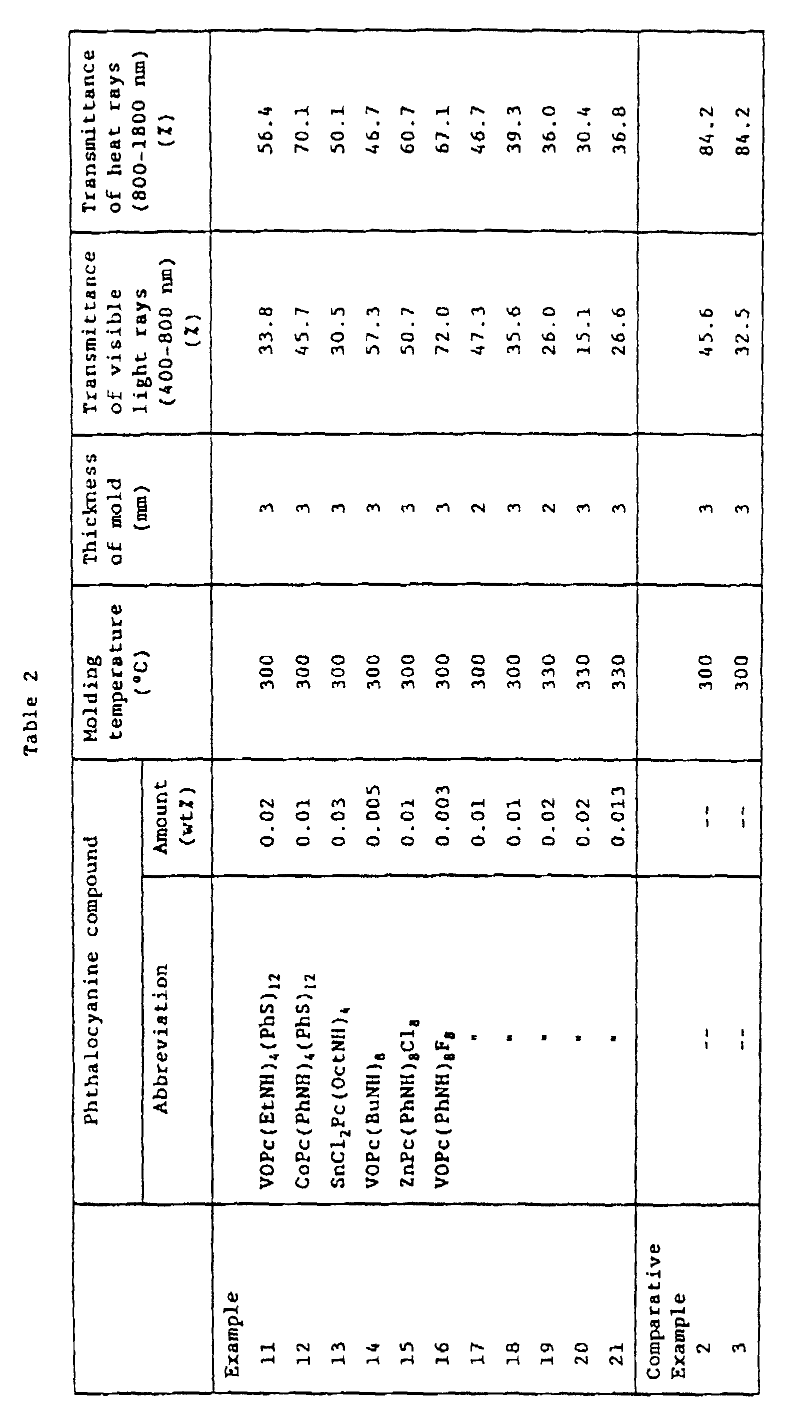

### Examples 22-40

Between 2 pieces of hard glass was injected by a conventional method a mixture of 100 parts by weight of methyl methacrylate, 0.2 parts of azobisisobutylnitrile, 0.1 parts of a releasing agent (ZELEC UN, product of DuPont Co.) and each of the phthalocyanine compounds listed in Table 3 and 4 in the amounts listed in Tables 3 and 4, and the samples were immersed for 14 hours in a water bath at 65°C. Next, they were heated for 1 hour in an oven at 90°C to the completion of polymerization. After polymerization was completed, they were peeled off of the glass to obtain transparent resin sheets of 3 mm thickness. The visible light transmittance and heat radiation transmittance of the obtained sheets were measured. The results are shown in Tables 3 and 4. The spectral transmittance of the sheet obtained in Example 40 was measured and is shown in Fig. 1.

### Comparative Example 4

A composition was prepared in the same formulation as in Example 22 by the same procedure as in Example 22, but without adding phthalocyanine compounds used in Example 22, to obtain the results shown in Table 4.

### Comparative Example 5

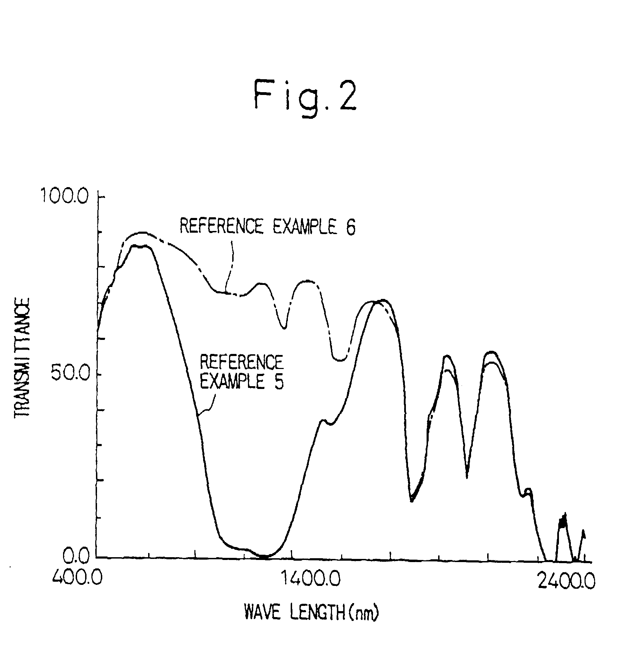

The same procedure as in Example 22 was followed, except for the addition of 0.01 parts of the infrared absorber Kayasorb IRG-022 (product of Nihon Kayaku, KK.) instead of the phthalocyanine compound in Example 22, to obtain the results shown in Table 4. The spectral transmittance of the obtained mold was measured and is shown in Fig. 2.

### Comparative Example 6

To 100 parts by weight of a molten methacrylic resin (SUMIPEX B, product of Sumitomo Kagaku Kogyo, KK.) was added the same infrared absorber as in Comparison 5, a sheet of 3 mm thickness was molded at 250°C using a T die and an extruder, and the results are shown in Table 4. The visible light transmittance and heat radiation transmittance of the obtained sheet were measured and are shown in Fig. 2.

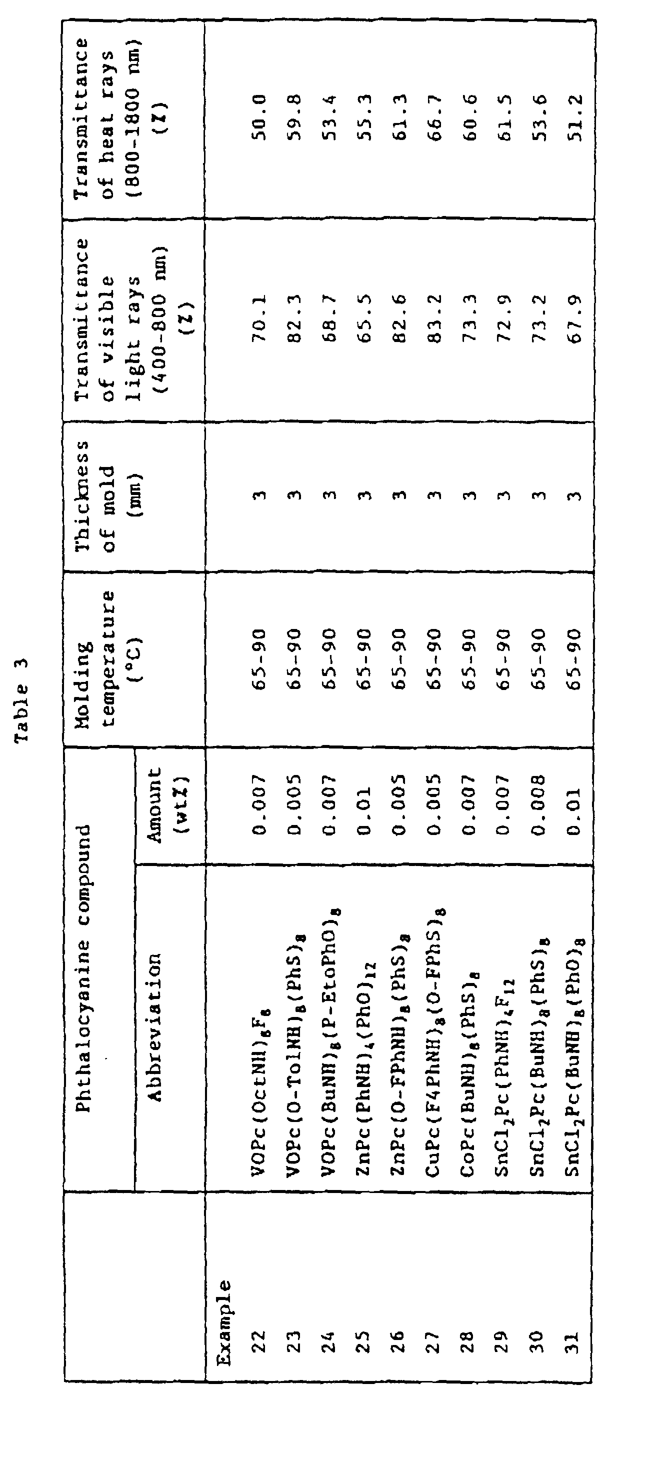

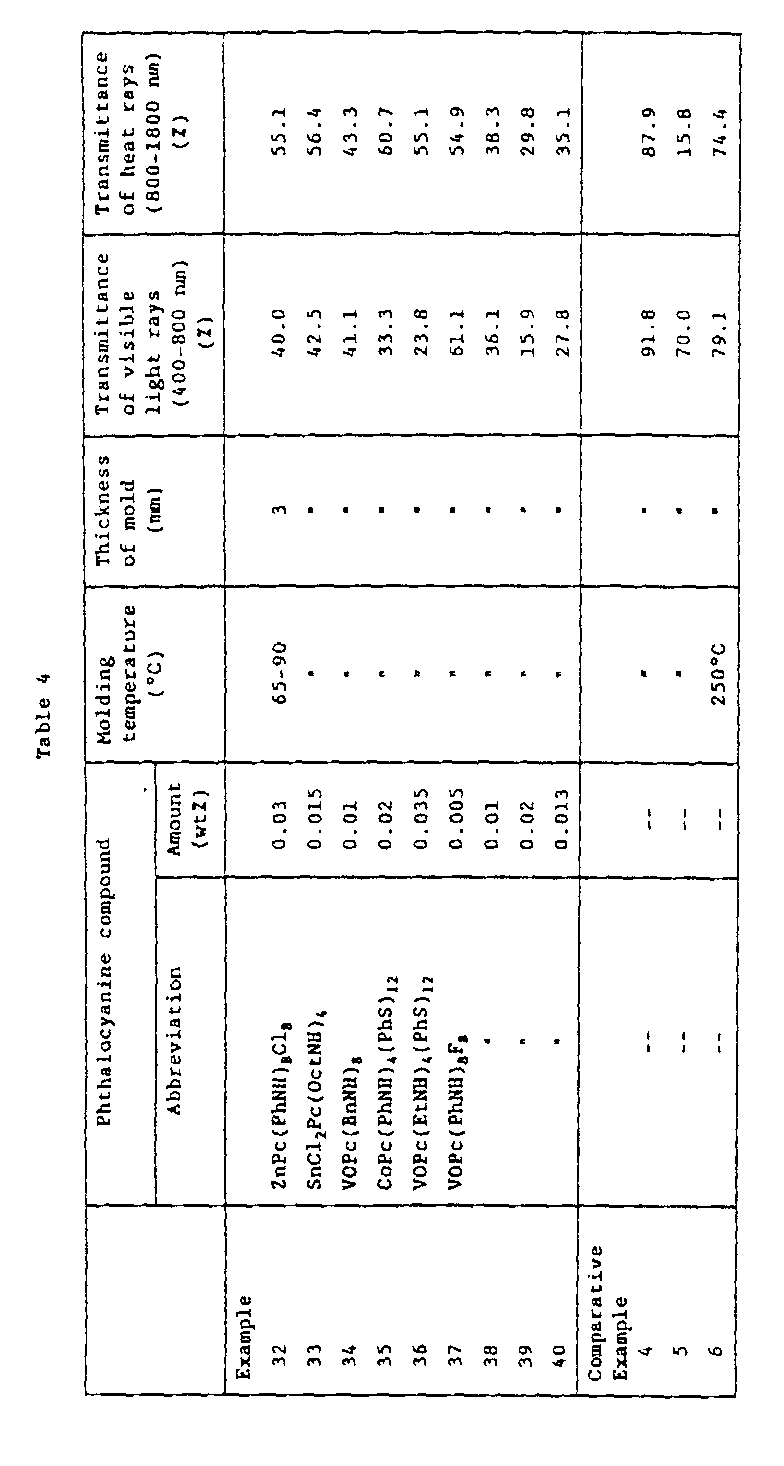

### Examples 41-42

Compositions prepared by adding the phthalocyanine compounds listed in Table 5 in the amounts listed in Table 5 to the basic recipe for the production of a polyvinyl chloride film consisting of 100 parts by weight of polyvinyl chloride resin, 45.0 parts by weight of dioctylphthalate and 2.5 parts by weight of a Ca-Ba-Zn-type stabilizer, were subjected to a conventional method of calender rolling at a molding temperature of 150°C to produce polyvinyl chloride films of 0.2 mm thickness. The visible light transmittance and heat light transmittance of the obtained films were measured, and the results are shown in Table 5.

### Examples 43-49

To 100 parts by weight of a molten polyethyleneterephthalate resin were added phthalocyanine compounds in the amounts listed in Table 5, and films of 0.1 mm and 0.05 mm thickness were prepared at a molding temperature of 280°C using an extruder and a film-producing machine. The visible light transmittance and heat radiation transmittance of the obtained films were measured, and the results are shown in Table 5.

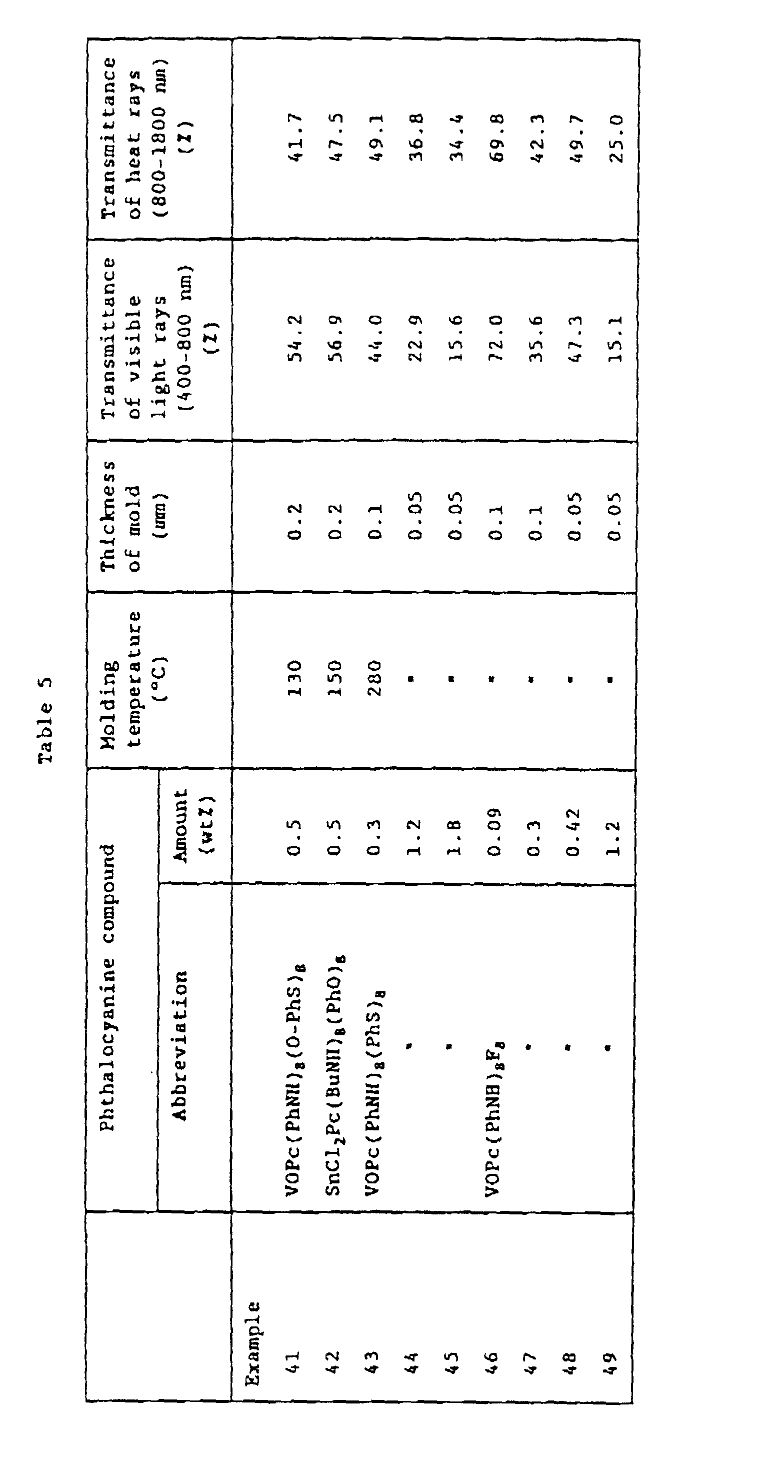

### Reference Example

The thermogravimety (TG) of the phthalocyanine compounds and of commercially available infrared absorbers was carried out using a TG-DTA-2000 manufactured by Mack Science, Inc. The measured values are shown in Table 6.

### * Measuring conditions

The measurement was carried out under a nitrogen current. The nitrogen flow rate was 200 ml/min. The rate of temperature increase was 10°C/min up to 150°C, and 5°C/min thereafter. The initial temperature for thermal decomposition was the temperature at the point of intersection of the weight decay curve.

**Table 6**

| Type of infrared absorber | Initial temperature for thermal decomposition (°C) | Temperature at 5% weight reduction (°C) | Temperature at 10% weight reduction (°C) |
|---|---|---|---|
| VoPc(PhNH)₈F₈ | 328 | 392 | 440 |
| VoPc(PhNH)₈(PhS)₈ | 308 | 316 | 335 |
| Kayssorb IRG-022 | 263 | 265 | 278 |
| Kayasorb IRG-002 | 267 | 271 | 289 |
| PA-1006 | 262 | 268 | 277 |

Kayasorb IRG-022 (product of Nihon Kayaku, KK.)
   - Name of substance:: 2,5-cyclohexadiene-1,4-diyridene-bis[N,N-bis(4-dibutylaminophenyl) ammonium) bis(hexafluoroantimonate)
Kayasorb IRG-002 (product of Nihon Kayaku, KK.)
   - Name of substance:: N,N-bis(4-dibutylaminophenyl)-N-[4-[N,N-bis(4-dibutylaminophenyl) amino] phenyl]-aminium. hexafluoroantimonate
PA-1006 (product of Mitsui Toatsu Kagaku, KK.)
   - Name of substance:: Bis(trichlorobenzene-1,2-dithiol) nickel (2:1) tetrabutylammonium

### Examples 50-53

To 100 parts by weight of a molten polycarbonate resin (trade name PANLITE 1285, product of Teijin Kasei, KK.) were added the phthalocyanine compounds listed in Table 7 in the amounts listed in Table 7, carbon black (channel black, average particle size 30 mm) was added thereto in the amounts listed in Table 7, and pellets were prepared at 280°C using an extruder and a pelletizer. Using the prepared pellets, 3 mm sheets were prepared at molding temperatures of 300°C and 330°C, using an injection molding machine. The visible light transmittance and heat radiation transmittance of the obtained sheets were measured. The results are shown in Table 7.

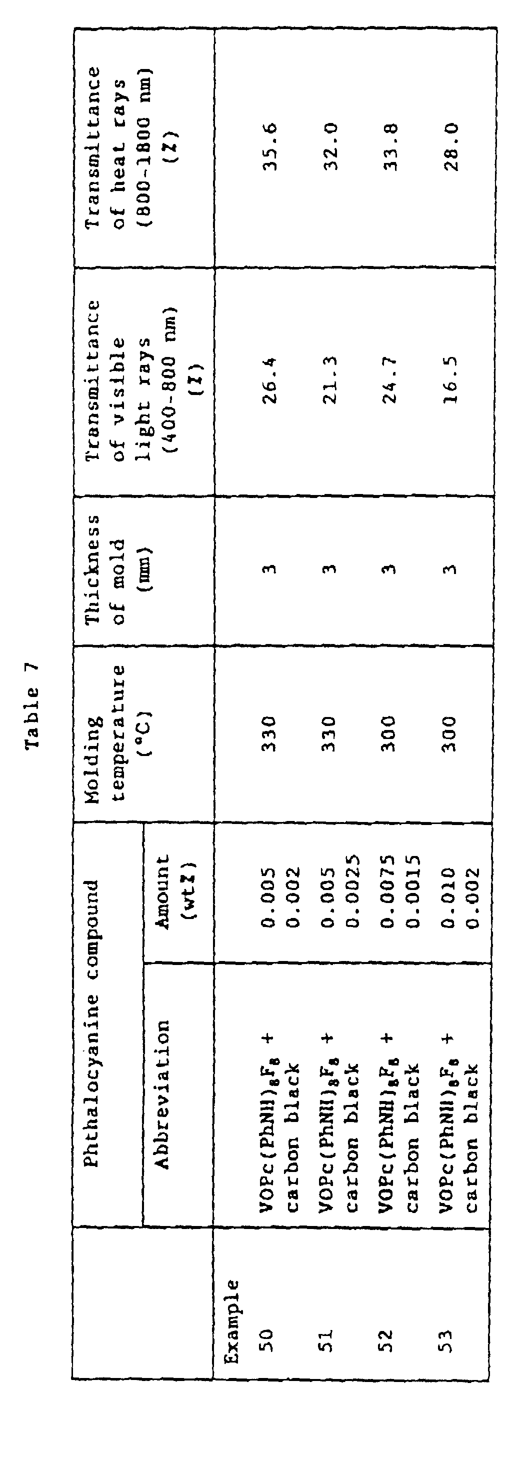

As is clear upon a comparison of the results of measurement of the visible light transmittance and heat radiation transmittance obtained in the Examples with those obtained in the Comparative Examples which contained no phthalocyanine compounds, the heat radiation transmittance values of the Examples were lower without much reduction in the visible light transmittance. In other words, the heat rays were efficiently absorbed and blocked with no interference in the transmittance of visible light. That is, the heat radiation-shielding materials according to the present invention clearly exhibited a superior heat radiation-shielding effect while being transparent. In addition, the weatherability test also revealed that the heat radiation-shielding materials according to the present invention can sufficiently withstand practical use. Furthermore, the phthalocyanine compounds to be used according to the present invention are highly soluble in organic solvents, have high compatibility to resins, and have high light fastness and heat resistance, making their application possible in all types of molding methods and providing good uniformity onto resins, and therefore the heat radiation-shielding materials according to the present invention which employ these phthalocyanine compounds may be used in a wide variety of fields.

As is clear from a comparison between Comparative Examples 2 and 3 and the Examples, when dyes are used without the phthalocyanine compounds according to the present invention, there is a reduction only in the visible light transmittance, with no reduction in the heat radiation transmittance.

The fact that the phthalocyanine compounds according to the present invention have excellent heat resistance may be seen from Table 6, and the heat resistance of VOPc(PhNH)₈F₈ is particularly excellent.

The molding temperature for injection molding, extrusion molding, etc. of transparent, high-strength thermoplastic resins in wide use, such as acrylic resins, polycarbonate resins, PET resins and the like, is 220-350°C, but practically no infrared absorbers have existed which may be used without the fear of their thermal decomposition at these temperatures. Up to the present, heat radiation-shielding materials have been produced by poorly productive methods such as the casting polymerization of acrylic resins. However, by using the phthalocyanine compounds according to the present invention, molding becomes possible at 220-350°C, and thus productivity is also improved.

Actually, when the phthalocyanine compounds according to the present invention were used, there was no **change** in the absorbance wavelength even when the molding temperatures were varied for the molding of the form, as seen from Fig. 1. However, from Fig. 2 it may be seen that when infrared absorbers by various manufacturers were used, a higher molding temperature led to poor heat resistance of the infrared absorber, and therefore the absorbance wavelength was notably attenuated.

Furthermore, although with engineering plastics such as polyacrylates, etc. extremely high molding temperatures of around 400°C are required, the molding of the phthalocyanine compounds according to the present invention, particularly VOPc(PhNH)₈F₈, is thought to be possible even at a molding temperature of 400°C.

When Examples 20 and 53, and Examples 21 and 50 are compared, their values of visible light transmittance and heat radiation transmittance are almost equal. However, in Examples 50 and 53, the amounts of the phthalocyanine compounds added are half or less than half those in Examples 21 and 20. In other words, it is shown that by adding carbon black, the amount of the phthalocyanine compound to be used may be reduced.

## Claims

1. A method for absorbing heat radiation while allowing visible light to pass, comprising the steps of
adding into a transparent resin a phthalocyanine compound represented by the following general formula I: 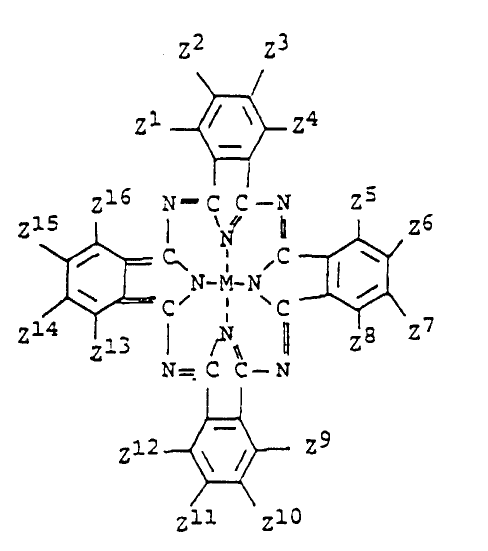 wherein Z¹ - Z¹⁶ independently represent SR¹, OR², a hydrogen atom, a halogen atom, or NHY where Y independently represents a phenyl group which may have a substituent or an alkyl group having 1 - 8 carbon atoms; R¹ and R² independently represent a phenyl group which may have a substituent or an alkyl group having 1 - 20 carbon atoms; and M represents a non-metal, metal, metal oxide or metal halide; provided that at least one of Z¹ - Z¹⁶ is NHY, so as to prepare a resin composition; and
forming the resin composition into a heat radiation-absorbing material, which is semi-transparent or transparent for visible light but blocks heat rays, wherein the content of the phthalocyanine in the article is 0.06 to 2.4 g/m².

2. A method according to claim 1, wherein at least 4 of Z², Z³, Z⁶, Z⁷, Z¹⁰, Z¹¹,Z¹⁴ and Z¹⁵ in the general formula I are NHY.

3. A method according to claim 2, wherein either of Z² and Z³, either of Z⁶ and Z⁷, either of Z¹⁰ and Z¹¹ and either of Z¹⁴ and Z¹⁵ in the general formula I are NHY.

4. A method according to claim 2, wherein at least 6 of Z², Z³, Z⁶, Z⁷, Z¹⁰, Z¹¹, Z¹⁴ and Z¹⁵ in the general formula I are NHY.

5. A method according to claim 2, 3 or 4, wherein at least 4 of Z¹, Z⁴, Z⁵, Z⁸, Z⁹, Z¹², Z¹³ and Z¹⁶ in the general formula I are halogen atoms, hydrogen or OR².

6. A method according to claim 5, wherein at least 4 of Z¹, Z⁴, Z⁵, Z⁸, Z⁹, Z¹², Z¹³ and Z¹⁶ in the general formula I are halogen atoms.

7. A method according to any of claims 1 to 6, wherein the content of said phthalocyanine compound is in a range of 0.0005 - 20 parts by weight based on 100 parts by weight of a transparent resin.

8. A method according to any of claims 1 to 7, wherein said resin is a transparent polycarbonate resin, poly(math)acrylic resin, polyethylene resin, polyester resin, polystyrene resin or vinyl chloride resin.

9. A method according to any of claims 1 to 8 which is carried out including addition of carbon black to the resin composition.

10. A method according to Claim 9, wherein the heat radiation - absorbing material contains 0.06 g/m² to 1.2 g/m² of the phthalocyanine compound I and 0.01 g/m² to 0.3 g/m² of carbon black.

11. A method according to any of claims 1 to 10, wherein the heat radiation - absorbing material is molded at a temperature of 220 to 350°C.

12. A method according to any of claims 1 to 10, wherein the phthalocyanine compound is dissolved in a polymerisable monomer and the resulting composition is cast-molded.

13. A method according to any of claims 1 to 10, wherein the phthalocyanine compound is dissolved in an acrylic resin to form an acrylic resin ink or paint, and the ink or paint is printed or coated onto a transparent resin board to prepare a heat radiation - shielding sheet.

14. The use of a heat radiation - shielding material prepared by a method according to any of claims 1 to 13 as a transparent or semi-transparent board, sheet or film blocking near - infrared rays.

## Patentansprüche

1. Verfahren zum Absorbieren von Wärmestrahlung, während sichtbares Licht durchgelassen wird, folgende Schritte aufweisend:
- Zugeben einer Phthalocyanin-Verbindung zu einem transparenten Harz, wobei die Phthalocyanin-Verbindung durch die folgende allgemeine Formel I dargestellt wird: 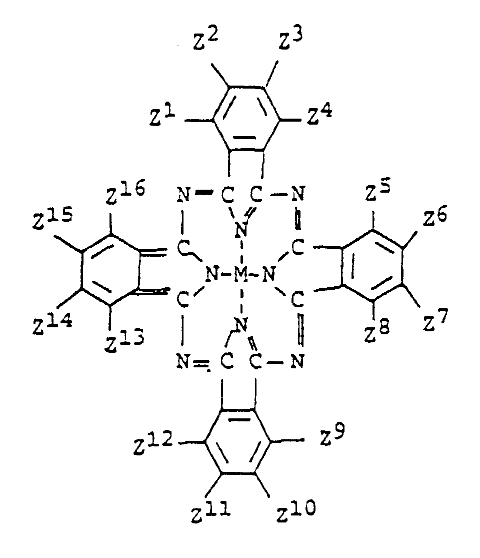 in der Z¹-Z¹⁶ unabhängig voneinander SR¹, OR², ein Wasserstoffatom, ein Halogenatom oder NHY darstellen, wobei Y unabhängig eine Phenylgruppe, die einen Substituenten haben kann, oder eine Alkylgruppe mit 1 - 8 Kohlenstoffatomen darstellt; R¹ und R² unabhängig voneinander eine Phenylgruppe, die einen Substituenten haben kann, oder eine Alkylgruppe mit 1 - 20 Kohlenstoffatomen darstellen; und M ein Nichtmetall, Metall, Metalloxid oder Metallhalogenid darstellt; mit der Maßgabe, daß mindestens eines von Z¹ - Z¹⁶ NHY ist, um eine Harz-Zusammensetzung herzustellen; und
- Formen der Harz-Zusammensetzung zu einem wärmestrahlungsabsorbierenden Material, das für sichtbares Licht halbdurchlässig oder durchlässig ist, für Wärmestrahlen aber eine Sperre bildet, wobei der Gehalt des Phthalocyanins in dem Gegenstand 0,06 bis 2,4 g/m² beträgt.

2. Verfahren nach Anspruch 1, bei dem in der allgemeinen Formel I mindestens vier von Z², Z³, Z⁶, Z⁷, Z¹⁰, Z¹¹, Z¹⁴ und Z¹⁵ NHY sind.

3. Verfahren nach Anspruch 2, bei dem in der allgemeinen Formel I eines von Z² und Z³, eines von Z⁶ und Z⁷, eines von Z¹⁰ und Z¹¹ und eines von Z¹⁴ und Z¹⁵ NHY ist.

4. Verfahren nach Anspruch 2, bei dem in der allgemeinen Formel I mindestens sechs von Z², Z³, Z⁶, Z⁷, Z¹⁰, Z¹¹, Z¹⁴ und Z¹⁵ NHY sind.

5. Verfahren nach Anspruch 2, 3 oder 4, bei dem in der allgemeinen Formel I mindestens vier von Z¹, Z⁴, Z⁵, Z⁸, Z⁹, Z¹², Z¹³ und Z¹⁶ Halogenatome, Wasserstoff oder OR² sind.

6. Verfahren nach Anspruch 5, bei dem in der allgemeinen Formel I mindestens vier von Z¹, Z⁴, Z⁵, Z⁸, Z⁹, Z¹², Z¹³ und Z¹⁶ Halogenatome sind.

7. Verfahren nach einem der Ansprüche 1 bis 6, bei dem der Gehalt der Phthalocyanin-Verbindung im Bereich von 0,0005 - 20 Gewichtsteilen auf der Basis von 100 Gewichtsteilen eines durchlässigen Harzes liegt.

8. Verfahren nach einem der Ansprüche 1 bis 7, bei dem das Harz ein durchlässiges Polycarbonat-Harz, Poly(meth)acryl-Harz, Polyethylen-Harz, Polyester-Harz, Polystyrol-Harz oder Vinylchlorid-Harz ist.

9. Verfahren nach einem der Ansprüche 1 bis 8, das unter Zugabe von Ruß zu der Harz-Zusammensetzung durchgeführt wird.

10. Verfahren nach Anspruch 9, bei dem das wärmestrahlungsabsorbierende Material 0,06 g/m² bis 1,2 g/m² der Phthalocyanin-Verbindung I und 0,01 g/m² bis 0,3 g/m² Ruß enthält.

11. Verfahren nach einem der Ansprüche 1 bis 10, bei dem das wärmestrahlungsabsorbierende Material bei einer Temperatur von 220 bis 350°C geformt wird.

12. Verfahren nach einem der Ansprüche 1 bis 10, bei dem die Phthalocyanin-Verbindung in einem polymerisierbaren Monomer gelöst wird und die sich ergebende Zusammensetzung formgegossen wird.

13. Verfahren nach einem der Ansprüche 1 bis 10, bei dem die Phthalocyanin-Verbindung in einem Acrylharz gelöst wird, um eine Acrylharz-Farbe oder ein Acrylharz-Anstrichmittel zu bilden, und die Farbe oder das Anstrichmittel auf eine durchlässige Harzplatte gedruckt oder als Beschichtung aufgetragen wird, um ein wärmestrahlungsabschirmendes Flachmaterial herzustellen.

14. Verwendung eines nach einem Verfahren gemäß einem der Ansprüche 1 bis 13 hergestellten, wärmestrahlungsabschirmenden Materials als eine durchlässige oder halbdurchlässige Platte, ein durchlässiges oder halbdurchlässiges Flachmaterial oder ein durchlässiger oder halbdurchlässiger Film, der für Strahlen im nahen Infrarotbereich eine Sperre bildet.

## Revendications

1. Procédé pour absorber le rayonnement thermique tout en laissant passer la lumière visible, comprenant les étapes consistant à
ajouter à une résine transparente une phtalocyanine répondant à la formule générale I suivante : 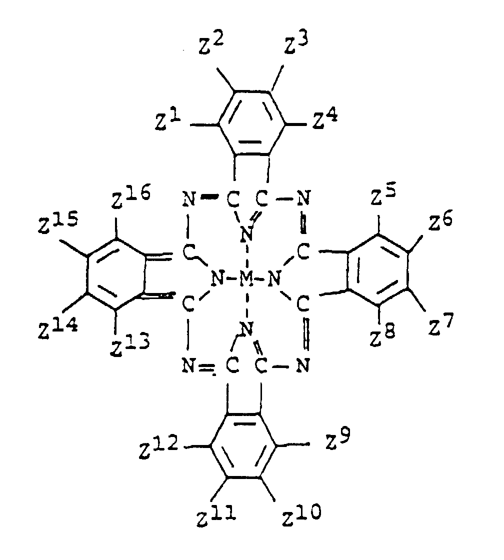 dans laquelle Z¹ - Z¹⁶ représentent indépendamment SR¹, OR², un atome d'hydrogène, un atome d'halogène, ou NHY, où Y représente indépendamment un groupe phényle qui peut avoir un substituant ou un groupe alkyle ayant 1 à 8 atomes de carbone ; R¹ et R² représentent indépendamment un groupe phényle qui peut avoir un substituant ou un groupe alkyle ayant 1 à 20 atomes de carbone ; et M représente un non-métal, un métal, un oxyde métallique ou un halogénure métallique ; sous réserve qu'au moins un des symboles Z¹ - Z¹⁶ soit NHY, de manière à préparer une composition de résine ; et
façonner la composition de résine sous la forme d'une matière absorbant le rayonnement thermique, qui est semi-transparente ou transparente à la lumière visible mais bloque les rayons thermiques, la teneur en phtalocyanine dans l'article étant de 0,06 à 2,4 g/m².

2. Procédé selon la revendication 1, dans lequel au moins quatre des symboles Z², Z³, Z⁶, Z⁷, Z¹⁰, Z¹¹, Z¹⁴ et Z¹⁵ de la formule générale I sont NHY.

3. Procédé selon la revendication 2, dans lequel l'un ou l'autre des symboles Z¹ et Z³, l'un ou l'autre des symboles Z⁶ et Z⁷, l'un ou l'autre des symboles Z¹⁰ et Z¹¹, et l'un ou l'autre des symboles Z¹⁴ et Z¹⁵ de la formule générale I sont NHY.

4. Procédé selon la revendication 2, dans lequel au moins six des symboles Z², Z³, Z⁶, Z⁷, Z¹⁰, Z¹¹, Z¹⁴ et Z¹⁵ de la formule générale I sont NHY.

5. Procédé selon les revendications 2, 3 ou 4, dans lequel au moins quatre des symboles Z¹, Z⁴, Z⁵, Z⁸, Z⁹, Z¹², Z¹³ et Z¹⁶ de la formule générale I sont des atomes d'halogène, des atomes d'hydrogène ou OR².

6. Procédé selon la revendication 5, dans lequel au moins quatre des symboles Z¹, Z⁴, Z⁵, Z⁸, Z⁹, Z¹², Z¹³ et Z¹⁶ de la formule générale I sont des atomes d'halogène.

7. Procédé selon l'une quelconque des revendications 1 à 6, dans lequel la teneur de cette phtalocyanine est dans l'intervalle de 0,0005 à 20 parties en poids pour 100 parties en poids d'une résine transparente.

8. Procédé selon l'une quelconque des revendications 1 à 7, dans lequel cette résine est une résine de polycarbonate transparente, une résine poly(méth)acrylique, une résine de polyéthylène, une résine de polyester, une résine de polystyrène et une résine de chlorure de vinyle.

9. Procédé selon l'une quelconque des revendications 1 à 8, qui est effectué en ajoutant du noir de carbone à la composition de résine.

10. Procédé selon la revendication 9, dans lequel la matière absorbant le rayonnement thermique contient 0,06 g/m² à 1,2 g/m² de la phtalocyanine I et 0,01 g/m² à 0,3 g/m² de noir de carbone.

11. Procédé selon l'une quelconque des revendications 1 à 10, dans lequel la matière absorbant le rayonnement thermique est moulée à une température de 220 à 350 °C.

12. Procédé selon l'une quelconque des revendications 1 à 10, dans lequel la phtalocyanine est dissoute dans un monomère polymérisable et la composition obtenue est moulée par coulée.

13. Procédé selon l'une quelconque des revendications 1 à 10, dans lequel la phtalocyanine est dissoute dans une résine acrylique pour former une encre ou une peinture de résine acrylique, et l'encre ou la peinture est imprimée ou appliquée sur un carton de résine transparente pour préparer une feuille arrêtant le rayonnement thermique.

14. Utilisation d'une matière arrêtant le rayonnement thermique préparée par un procédé selon l'une quelconque des revendications 1 à 13 comme carton, feuille ou film transparent ou semi-transparent bloquant les rayons dans le proche infrarouge.
